# EUROPÄISCHE PATENTSCHRIFT

(11) **EP 4 074 490 B1**
(45) Veröffentlichungstag und Bekanntmachung des Hinweises auf die Patenterteilung: **01.01.2025**
(21) Anmeldenummer: 22000103.6
(22) Anmeldetag: 15.04.2022
(51) Int. Cl.: B29C 64/153, B29C 64/245, B29C 64/25, B29C 64/35, B29C 64/379, B29C 64/371, B33Y 40/00, B22F 3/24, B29C 64/241, B22F 10/68, B22F 10/73, B22F 12/00, B22F 12/70, B22F 12/80

(54) **AUSPACKSTATION UND IHR BETRIEBSVERFAHREN**
UNPACKING STATION AND ITS OPERATING METHOD
STATION DE DÉBALLAGE ET SON PROCÉDÉ DE FONCTIONNEMENT

(30) Priorität: 15.04.2021 DE 102021001972
(43) Veröffentlichungstag der Anmeldung: 19.10.2022
(73) Patentinhaber: DMG Mori Additive GmbH, 33689 Bielefeld (DE)
(72) Erfinder: Zimmer, Günther, 77866 Rheinau (DE); Zimmer, Martin, 77866 Rheinau (DE)
(74) Vertreter: MERH-IP Matias Erny Reichl Hoffmann Patentanwälte PartG mbB

(56) Entgegenhaltungen:
- EP-A1- 3 533 538
- DE-A1- 102014 010 501
- DE-U1- 202019 003 693

## Beschreibung

Die Erfindung betrifft eine Auspackstation mit einer um zwei Achsen schwenkbaren Bauplattenaufnahme zum Entpacken von mittels eines additiven Fertigungsverfahrens hergestellten Bauteilen, mit einem verschließbaren, mittels eines Gasstroms durchströmbaren Arbeitsraum sowie ein Verfahren zum Betrieb einer derartigen Auspackstation mit einem auf einer Bauplatte aufgebauten Werkstück.

Aus der DE 10 2014 010 501 A1 ist eine von einem Gasstrom durchströmte Auspackstation bekannt, bei der die Bauplatte mit dem darauf aufgebauten Werkstück in einen Arbeitsraum eingesetzt wird.

Das Dokument EP 3 533 538 A1 offenbart eine Reinigungsvorrichtung, welche dreidimensionale Objekte, die durch schichtweises Aufbringen und selektives Verfestigen eines pulverförmigen Aufbaumaterials hergestellt worden sind, von die Objekte umgebendem und/oder in Öffnungen oder Kanälen der Objekte verbliebenem, nicht verfestigtem pulverförmigem Aufbaumaterial reinigt. Ein zu reinigendes Objekt kann während des Reinigungsprozesses in der Reinigungsvorrichtung in eine Spanneinrichtung auf einem Drehteller der Reinigungsvorrichtung lösbar eingespannt sein. Der Drehteller kann beispielsweise um eine erste Drehachse mittels eines ersten Motors drehend antreibbar sein, insbesondere in einem Winkel von 0 bis 360 Grad. Weiterhin kann der Drehteller an einem Dreharm gelagert sein, der seinerseits um eine zweite Drehachse mittels eines zweiten Motors drehbar angetrieben ist.

Der vorliegenden Erfindung liegt die Problemstellung zugrunde, die Arbeitssicherheit der Auspackstation zu erhöhen und eine Automatisierung der Werkstückhandhabung zu ermöglichen.

Diese Problemstellung wird mit den Merkmalen der unabhängigen Ansprüche 1 und 10 gelöst. Dazu ist der Arbeitsraum in einem geschlossenen, mittels einer Umwälzpumpe beaufschlagten Kreislauf des Gasstroms eingebunden. Zwischen dem Arbeitsraum und der Umwälzpumpe ist zumindest in einem Teil-Gasstrom eine Staubmessvorrichtung angeordnet. Außerdem ist der Umwälzpumpe eine Abscheidevorrichtung vorgeschaltet.

Beim Betrieb wird die Bauplatte mit dem Werkstück auf der Bauplattenaufnahme fixiert. Der Arbeitsraum wird verschlossen. Mittels der Umwälzpumpe wird Gas in einem geschlossenen Kreislauf durch den Arbeitsraum, die Staubmessvorrichtung und die Abscheidevorrichtung gefördert. Die Staubbelastung wird kontinuierlich mittels der Staubmessvorrichtung ermittelt. Bei Unterschreiten eines voreingestellten Schwellenwertes der Staubbelastung wird ein Freigabesignal ausgegeben.

Mittels der Erfindung wird das Auspacken additiv hergestellter Werkstücke beendet, wenn in einem den Arbeitsraum durchströmenden Gaskreislauf der Schadstoffgestalt unterhalb einer kritischen Grenze liegt. Beim Öffnen des Arbeitsraums zur Entnahme des bearbeiteten Werkstücks nach diesem Zeitpunkt besteht für den Bediener eine erheblich reduzierte Gesundheitsgefahr. Das Signal des Schadstoffgehalts kann in einem automatisierten Prozessablauf auch zur Auslösung nachfolgender Verfahrensschritte eingesetzt werden.

Weitere Einzelheiten der Erfindung ergeben sich aus den Unteransprüchen und der nachfolgenden Beschreibung schematisch dargestellter Ausführungsformen.
- Figur 1:: Auspackstation;
- Figur 2:: Querschnitt der Auspackstation aus Figur 1;
- Figur 3:: Haube;
- Figur 4:: Bodenteil;
- Figur 5:: Werkstückspannsystem;
- Figur 6:: Schnitt der Werkzeugaufnahmeeinheit;
- Figur 7:: Schema der Gasströmung.

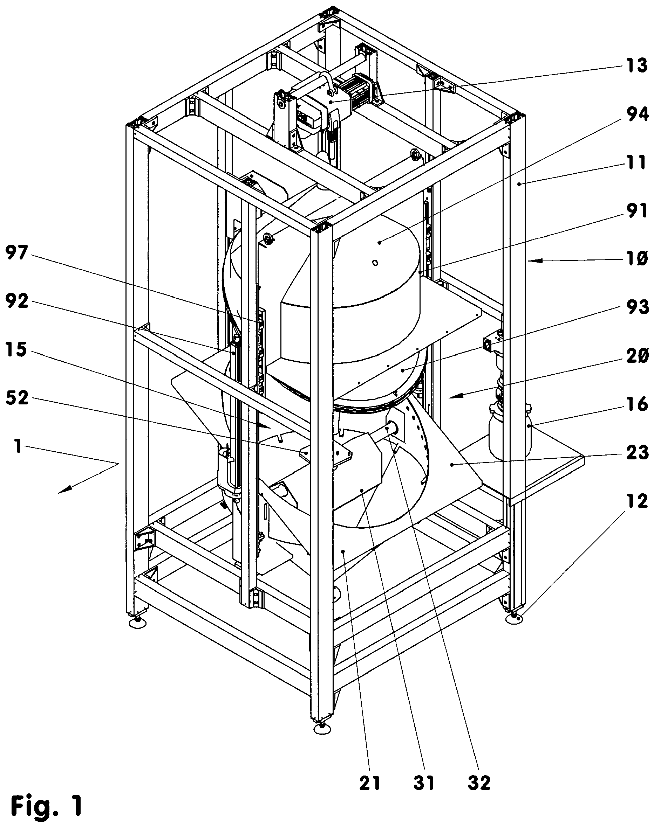

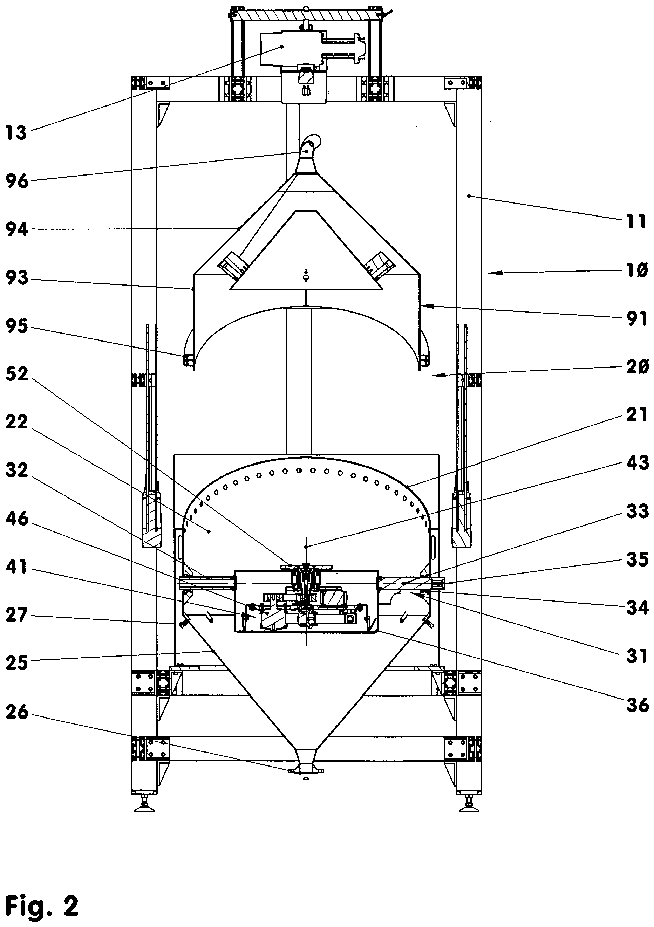

Die Figuren 1 und 2 zeigen eine Auspackstation (10) für Bauteile, die in einem additiven Fertigungsverfahren hergestellt sind. Derartige Fertigungsverfahren sind beispielsweise Laserschmelzverfahren oder Lasersinterverfahren. In diesen Fertigungsverfahren wird auf einer Bauplatte das einzelne Werkstück schichtweise aus einem pulverartigen Werkstoff aufgebaut, wobei die einzelnen Schichten miteinander verschmolzen werden. Der eingesetzte Werkstoff kann ein metallischer Werkstoff oder ein Kunststoff sein. Das eingesetzte Pulver hat beispielsweise eine Körnung von 15 Mikrometern bis 70 Mikrometer. Zum Erhitzen der zu verschmelzenden Bereiche wird ein Laser eingesetzt. Die eingesetzte Bauplatte hat beispielsweise eine quadratische Grundfläche mit einer Kantenlänge von 120 Millimetern oder 300 Millimetern.

Die Auspackstation (10) hat ein Traggerüst (11), das in den Darstellungen vier Stellfüße (12) aufweist. Die Auspackstation (10) kann auch verfahrbar ausgebildet sein. Sie steht dann beispielsweise auf vier Laufrollen. Auf dem Traggerüst (11) ist eine Hubvorrichtung (13) angeordnet. Im Ausführungsbeispiel ist dies ein Kettenzug (13), mit dem einzelne Komponenten der Auspackstation (10) angehoben werden können. Die Gesamthöhe der Auspackstation (10) beträgt beispielsweise 2,4 Meter. Die dargestellte Auspackstation (10) hat eine Grundfläche von beispielsweise 1,5 Meter mal 1,4 Meter.

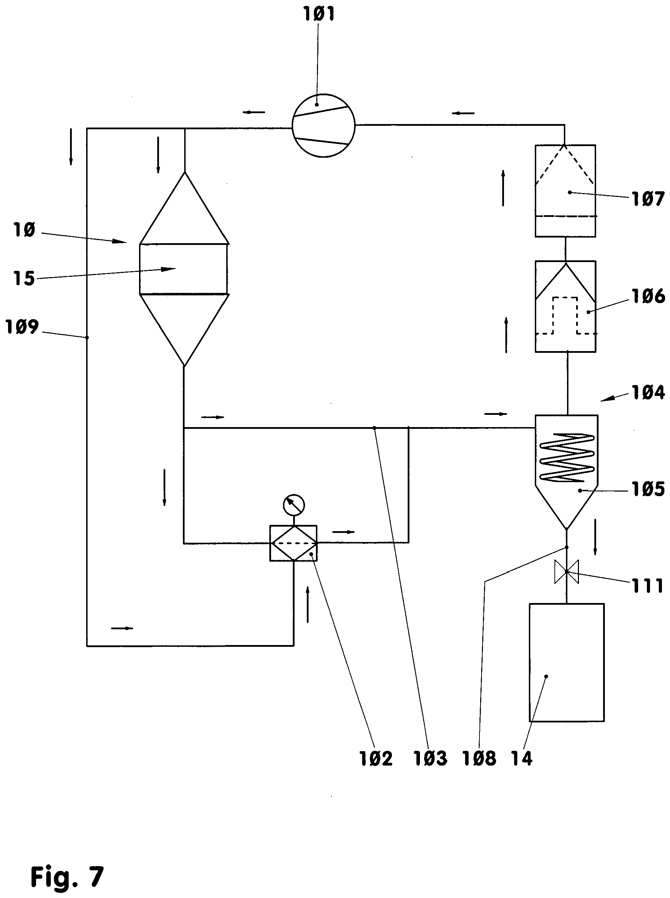

Das Traggerüst (11) kann verkleidet sein. Beispielsweise hat es eine Tür als Zugang zu einer im Traggerüst (11) angeordneten Auspackeinheit (20). In die Verkleidung kann auch ein Bildschirm, es können auch Bedienelemente, Medienzuführungsanschlüsse etc. integriert sein. Im unteren Bereich der Auspackstation (10) kann eine Zugangsöffnung zu einem Pulversammelbehälter (14), vgl. Figur 7, vorgesehen sein.

Die Auspackeinheit (20) hat ein Bodenteil (21) und eine Haube (91). In den Darstellungen der Figuren 1 und 2, die die Auspackstation (10) in einer Beladeposition zeigen, ist die Haube (91) vom Bodenteil (21) beabstandet. Das Bodenteil (21) ist im Traggerüst (11) z.B. schwingfähig gelagert. Es kann aber auch im Traggerüst (11) befestigt sein. Die Haube (91) ist im geöffneten Zustand beispielsweise um 700 Millimeter relativ zum Bodenteil (21) angehoben. Zum Anheben dienen zwei Linearhubvorrichtungen (92), die auf beiden Seiten der Auspackeinheit (20) angeordnet sind. Die Trennfuge des Bodenteils (21) und der Haube (91) liegt im Ausführungsbeispiel in einer schrägen Ebene. Hiermit liegt die Kante des Bodenteils (21) bei der Werkstückbeschickung beispielsweise 800 Millimeter oberhalb des Hallenbodens.

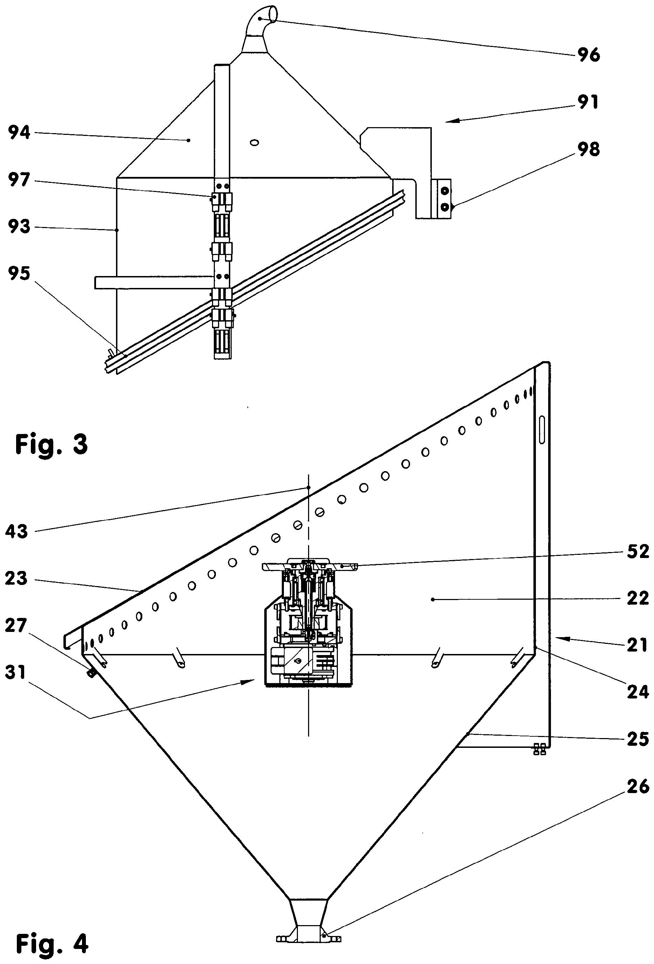

Die Figur 3 zeigt die Haube (91). Sie hat einen zylindermantelförmigen Grundkörper (93) und ein kegelmantelförmiges Oberteil (94). Der Grundkörper (93) trägt an seiner Außenseite eine umlaufende Doppeldichtung (95). Diese z.B. aufblasbare Doppeldichtung (95) kontaktiert bei geschlossener Auspackeinheit (20) die Innenwandung (22) des Bodenteils (21). Damit wird der innenliegende Arbeitsraum (15) der Auspackstation (10) quasi hermetisch gegen die Umgebung (1) abgedichtet. Beim Anhaben der Haube (91) wird zunächst die obere der Doppeldichtungen (95) freigelegt und mittels eines Gasstroms gereinigt. Anschließend wird beim weiteren Anheben auch die untere der Doppeldichtungen (95) gereinigt. Damit verbleiben auf der Doppeldichtung (95) keine Pulverreste, womit beim nächsten Schließen der Haube ein hermetisches Abdichten des Arbeitsraums (15) sichergestellt wird.

Im Oberteil (94) ist ein Gaszuführanschluss (96) angeordnet. Dieser durchdringt die Wandung der Haube (91), sodass beim Betrieb der Auspackstation (10) durch diesen Gaszuführanschluss (96) Gas in den Arbeitsraum (15) gefördert wird. Die Nennweite des Gaszuführanschlusses beträgt im Ausführungsbeispiel 50 Millimeter.

An beiden Seiten trägt die Haube (91) jeweils zwei Kugelumlaufschuhe (97). Mittels dieser Kugelumlaufschuhe (97) ist die Haube (91) im vertikaler Richtung z.B. im Traggerüst (11) geführt. Zusätzlich wird die Haube (91) mittels einer an ihrer Rückseite angeordneten Stützrolle (98) im Traggerüst (11) abgestützt.

In den Figuren 2 und 4 ist das Bodenteil (21) in zwei zueinander orthogonalen Schnittebenen dargestellt. Das Bodenteil (21) hat einen mittels eines Randes (23) begrenzten Zylindermantel (24), an den sich in diesen Darstellungen ein nach unten verjüngender kegelförmiger Trichter (25) anschließt. An unteren Ende des Trichters (25) ist ein Absauganschluss (26) angeordnet, der die Wandung des Trichters (25) durchdringt. Die Nennweite des Absauganschlusses (26) entspricht im Ausführungsbeispiel der Nennweite des Gaszuführanschlusses (96). Weiterhin kann am Bodenteil (21) ein Medienflansch für weitere Betriebsmedien vorgesehen sein. Entlang einer Umfangslinie des Trichters (25) sind mehrere Spülanschlüsse (27) vorgesehen. Diese können beispielsweise zur Reinigung der Doppeldichtung (95) und/oder des Trichters (25) eingesetzt werden.

Im Bodenteil (21) ist eine Werkstückaufnahmeeinheit (31) schwenkbar gelagert. Hierzu hat die Werkstückaufnahmeeinheit (31) eine Schwenkwelle (32) mit einer horizontalen Schwenkachse (33). Die Schwenkwelle (32) ist beidseitig mittels Wälzlagern (34) im Bodenteil (21) gelagert. Mittels eines beispielsweise an der Außenseite des Bodenteils (21) angeordneten, hier nicht dargestellten Schwenkantriebs ist die Werkstückaufnahmeeinheit (31) in beide Schwenkrichtungen um einen Winkel von jeweils z.B. 240 Grad schwenkbar. Zur Momentenübertragung des Schwenkantriebs hat die Schwenkwelle (32) der Werkstückaufnahmeeinheit (31) eine Passfedernut (35). Der Schwenkantrieb hat einen elektrisch angetriebenen Servomotor und ein Weg- und/oder Winkelmesssystem. Damit kann der jeweilige Schwenkwinkel der Werkstückaufnahmeeinheit (31) um die genannte erste Schwenkachse (33) beispielsweise mit einer Genauigkeit von einem Zehntel Grad eingestellt werden. Die maximale Schwenkgeschwindigkeit des Schwenkantriebs beträgt z.B. eine Umdrehung pro Minute.

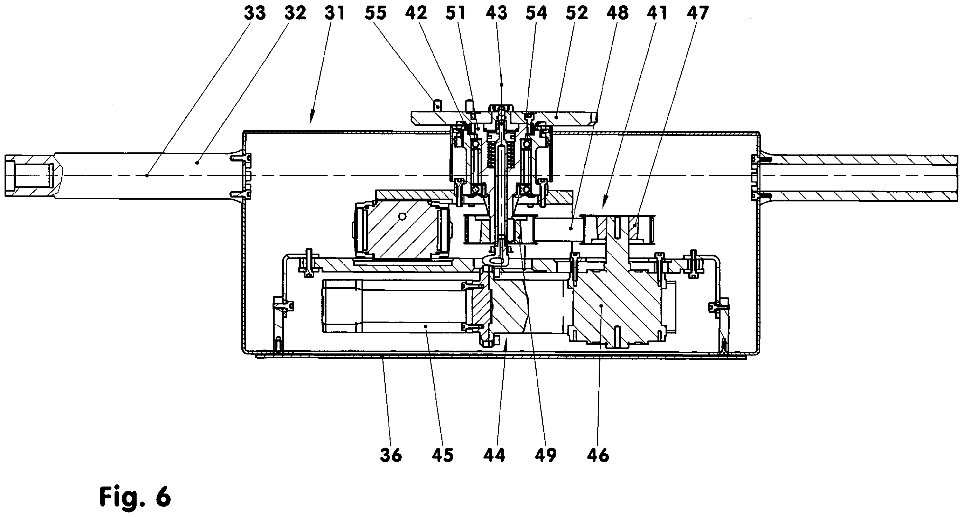

Die Werkstückaufnahmeeinheit (31), vgl. Figur 6, hat einen zentralen Tragkörper (36), in dem eine Werkstückschwenkeinheit (41) schwenkbar gelagert ist. Zur Lagerung sind beispielsweise Wälzlager (42) eingesetzt. Die Schwenkachse (43) der Werkstückschwenkeinheit (41) ist in vertikaler Richtung orientiert. Diese Schwenkachse (43) wird im Folgenden als zweite Schwenkachse (43) bezeichnet. Der Werkstückschwenkantrieb (44) hat einen im Tragkörper (36) angeordneten Elektromotor (45) in der Bauform eines Servomotors mit einem nachgeschalteten Getriebe (46). Das Getriebe (46) ist beispielsweise ein Kegelradgetriebe, dessen Ausgangswelle mit der Eingangswelle einen Winkel von 90 Grad einschließt. Auch der Einsatz eines Schneckenradgetriebes ist denkbar. Die Ausgangswelle des Getriebes (46) treibt eine Riemenscheibe (49) an, die mittels eines Riementriebs (48) eine Riemenscheibe (48) der Werkstückschwenkeinheit (41) treibt. Der Riementrieb (48) kann hierbei als Flachriemen, als Keilriemen, als Zahnriemen, etc. ausgebildet sein. Die elektrische Ansteuerung und die Überwachung des Werkstückschwenkantriebs (44) erfolgt wie die oben beschriebene Ansteuerung des Schwenkantriebs der Werkstückaufnahmeeinheit (31). Der Schwenkwinkel der Werkstückschwenkeinheit (31) beträgt beispielsweise 360 Grad. Die Winkelgeschwindigkeit der Werkstückschwenkeinheit (41) entspricht der Winkelgeschwindigkeit der Werkstückaufnahmeeinheit (31).

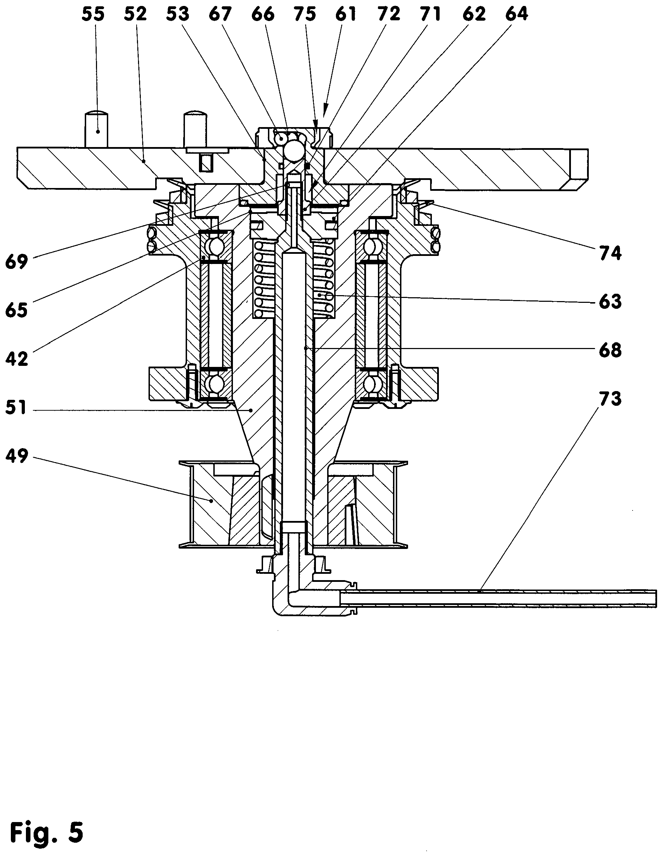

Die Werkstückschwenkeinheit (41) hat einen Lagerungskörper (51), ein Werkstückspannsystem (61) und eine Bauplattenaufnahme (52), vgl. Figur 5. Die Bauplattenaufnahme (52) ist beispielsweise eine ebene, z.B. quadratische Platte mit einem zentralen Durchbruch (53). Im Ausführungsbeispiel hat die Bauplattenaufnahme (52) angefaste Ecken. Die Größe der Bauplattenaufnahme (52) ist beispielsweise auf die jeweils eingesetzte Bauplatte abgestimmt. Die Bauplattenaufnahme (52) ist z.B. austauschbar ausgebildet. Zum Austausch können z.B. Befestigungsschrauben (54) gelöst werden. Außerhalb des Durchbruchs (53) sind beispielsweise zwei Zentrierbolzen (55) zum Zentrieren der Bauplatte angeordnet.

Das Werkstückspannsystem (61) ist im Ausführungsbeispiel als Nullpunktspannsystem aufgebaut, vgl. DE 10 2018 009 226 A1.

Das in der Figur 5 dargestellte Werkstückspannsystem (61) hat einen zentralen Stößel (62), der mittels eines als Druckfeder (63) ausgebildeten Federenergiespeichers (63) in der Darstellung der Figur 5 nach oben belastet ist. Der Stößel (62) hat einen abgedichteten Ringkolben (64), der an einer Zylinderwandung (65) geführt ist. Bei entspannten Federenergiespeichern (63) belastet der Stößel (62) ein Kugelkeilsystem (66), sodass die außenliegenden Kugeln (67) nach außen verdrängt werden. Bei eingesetzter Bauplatte hintergreifen diese Kugeln (67) einen komplementär ausgebildeten Eingriffsbolzen der Bauplatte. Der Stößel (62) ist hohl ausgebildet und hat einen innenliegenden Pneumatikkanal (68). Im seinem oberen Bereich hat der z.B. mehrteilig aufgebaute Stößel (62) Radialdurchbrüche (69). Diese Radialdurchbrüche (69) verbinden den Pneumatikkanal (68) mit einem Druckraum (71). Der Druckraum (71) ist mittels des Ringkolbens (64) und eines Dichtrings (72) begrenzt. Der Stößel (62) ist beispielsweise mittels eines Pneumatikrohrs (73) und eines vorgeschalteten flexiblen Schlauchs mit dem Medienanschluss des Bodenteils (21) verbunden. Das Eindringen von Verschmutzungen in das Werkstückspannsystem (61) wird mittels mehrerer Dichtelemente (74) verhindert.

Vor dem Spannen der Bauplatte wird der Druckraum (71) mit pneumatischem Druck beaufschlagt, sodass der Stößel (62) unter Belastung der Druckfedern (63) in der Darstellung der Figur 5 nach unten verschoben wird. Die Kugeln (67) werden nach innen verdrängt, sodass die Bauplatte mit ihrem Eingriffsbolzen problemlos in eine Eingriffsausnehmung (75) eingesetzt werden kann. Anschließend wird der pneumatische Druck im Druckraum (71) reduziert, z.B. auf den Umgebungsdruck. Die sich entlastenden Druckfedern (63) verschieben den Stößel (62) nach oben, sodass der Eingriffsbolzen der Bauplatte fixiert wird. Das Lösen der Bauplatte erfolgt analog.

Die Auspackstation (10) hat im Ausführungsbeispiel ein Vibrationsmodul (16). Hiermit kann beispielsweise das Bodenteil (21) mit Impulsen oder Schwingungen beaufschlagt werden. Auch eine Schwingungsanregung der Bauplattenaufnahme (52) ist denkbar.

Die Figur 7 zeigt ein Schema der Gasströmung. An die Auspackstation (10) ist eine Gaspumpe (101) angeschlossen. Diese ist beispielsweise als Saugpumpe ausgebildet und fördert Gas, z.B. Inertgas, Stickstoff, etc. durch den Gaszuführanschluss (96) in den Arbeitsraum (15) der Auspackstation (10). Aus dem Bodenteil (21) der Auspackstation (10) wird eine Gasströmung durch den Absauganschluss (26) hindurch abgesaugt. Der abgesaugte Volumenstrom wird im Ausführungsbeispiel aufgeteilt in einen ersten Teilstrom, der durch eine Staubmessvorrichtung (102) hindurchgeleitet wird und einen zweiten Teilstrom, der durch einen Bypass (103) geleitet wird. Das Verhältnis der beiden Teilströme kann fest oder einstellbar sein. Es ist auch denkbar, den Kreislauf ohne Bypass (103) auszubilden. Der Staubmessvorrichtung (102) ist eine Abscheidevorrichtung (104) nachgeschaltet. Diese Abscheidevorrichtung (104) hat beispielsweise einen Grobabscheider (105), einen mittelfeinen Filter (106) und einen Feinfilter (107), die in Reihe zueinander geschaltet sind. Der Grobabscheider (105) ist mittels eines verschließbaren Pulverausgabekanals (108) mit dem Pulversammelbehälter (14) verbunden. Die Saugpumpe (101) saugt das gefilterte Gas durch die Auspackstation (10), die Staubmessvorrichtung (102) und die Abscheidevorrichtung (104), sodass die Saugpumpe (101) eine Umwälzpumpe (101) eines geschlossenen Kreislaufs bildet.

Von der Druckseite der Umwälzpumpe (101) zweigt eine Spülleitung (109) ab. Diese mündet an der Staubmessvorrichtung (102).

Die Spülluft wird hier beispielsweise zur Reinigung der optischen Sensoren der Staubmessvorrichtung (102) eingesetzt.

Das Staubmeßgerät (102) hat im Ausführungsbeispiel eine Lichtquelle und einen optischen Sensor. Dieser empfängt z.B. eine Wellenlänge von 880 Nanometer. Die mittels des Sensors aufgenommene Lichtintensität ist beispielsweise proportional zur Staubbelastung des gemessenen Gases. Beispielsweise gibt der Sensor ein analoges Signal zwischen 4 Milliampere und 20 Milliampère an eine zentrale Steuerung der Auspackstation (10) aus.

Der Grobabscheider (105) ist im Ausführungsbeispiel ein Zyklonabscheider (105). Er hat einen Eingang und zwei Ausgänge. Einen ersten Ausgang bildet der Pulverausgabekanal (108)..Der zweite Ausgang mündet in den mittelfeinen Filter (106).

Das mittelfeine Filter (106) hat beispielsweise eine von außen nach innen durchströmte Filterpatrone. Es hat z.B. eine Filterfläche von 48000 Quadratzentimeter. Das Filtervlies ist aus Cellulose hergestellt und hat eine Staubkapazität von 4000 Gramm. Sein Druckwiderstand bei Einsatzbeginn beträgt beispielsweise 24 Millibar, sein Widerstand bei Nutzungsende z.B. 65 Millibar. Der maximale Luftdurchlass beträgt beispielsweise 8 Kubikmeter pro Minute. Die Filterfeinheit beträgt 99,9 % bei Partikeln, die größer sind als 3 Mikrometer.

Das Feinfilter (107) hat im Ausführungsbeispiel eine zylinderförmige Gestalt. Sein Durchmesser beträgt beispielsweise 160 Millimeter und seine Länge 190 Millimeter. Die Filterfläche beträgt z.B. 0,7 Quadratmeter. Das Filtermaterial ist beispielsweise Glasfaserpapier. Das hier eingesetzte Feinfilter (107) ist ein Schwebstofffilter der Klasse H14 nach

EN 1822-1:2009. Mittels dieses Feinfilters (107) werden die im Gasstrom enthaltenen Partikel weiter abgeschieden.

Das mittels des additiven Fertigungsverfahrens hergestellte, auf der Bauplatte aufgebaute Werkstück ist nach der Herstellung in ein Pulverbett eingebettet. Die Bauplatte mitsamt dem Werkstück und des Pulvers wird aus der Herstellungsmaschine entnommen und in die Auspackstation (10) eingesetzt. Die Auspackstation (10) steht hierbei in der geöffneten Stellung, wie in den Figuren 1 und 2 dargestellt. Die Handhabung der bestückten Bauplatte kann manuell oder mittels einer Handhabungsvorrichtung erfolgen. Bei einer manuellen Handhabung trägt der Bediener sowohl einen Hautschutz, z.B. Handschuhe, als auch einen Atemschutz.

In der Auspackstation (10) wird die Bauplatte beispielsweise derart auf die Bauplattenaufnahme (52) aufgesetzt, dass ihr Eingriffsbolzen in die Eingriffsausnehmung (75) der Werkstückspannvorrichtung (61) ragt und die Zentrierbolzen (55) in Zentrierbolzenaufnehmungen der Bauplatte ragen. Hierbei ist der Druckraum (71) pneumatisch belastet, sodass der Stößel (62) die Druckfedern (63) komprimiert. Nach dem Einsetzen der Bauplatte wird diese mittels des kombinierten mechanischpneumatischen Werkstückspannsystems (61) an der Bauplattenaufnahme (52) fixiert. Auch eine andere Ausbildung des Werkstückspannsystems (61) ist denkbar.

Anschließend wird die Haube (91) auf das Bodenteil (21) abgesenkt. Hierbei wird der Arbeitsraum (15) hermetisch gegen die Umgebung (1) abgedichtet. Der Befehl zum Schließen des Arbeitsraums (15) kann manuell z.B. mittels eines Taster gegeben werden. Es ist aber auch denkbar, dass eine Rückmeldung der erfolgten Werkstückfixierung das Schließen der Arbeitseinheit (20) auslöst. Hierfür wird beispielsweise die Bewegung des Stößels (62) relativ zum Lagerungskörper (51) mittels eines Wegmesssystems oder eines Schalters überwacht. Ein an der Haube (91) angeordneter Kollisionsschutzschalter verhindert ein Schließen der Haube (91), falls sich noch Gegenstände im Öffnungsbereich der Haube (91) befinden.

Nach dem Schließen der Arbeitsstation (10) wird mittels der Umwälzpumpe (101) z.B. Gas beispielsweise aus einem hier nicht dargestellten Gasspeicher in den Arbeitsraum (15) gefördert. Das eingesetzte Gas ist beispielsweise Argon, Stickstoff, etc. Damit wird der Gehalt des Sauerstoffs im Gasgemenge des Arbeitsraums beispielsweise auf einen Wert von 5 % reduziert. Beim Fördern des Gases entsteht im Arbeitsraum (15) z.B. ein Überdruck von 20 Millibar. Damit wird zum einen die Gefahr einer Explosion vermindert, zum anderen wird eine Reaktion des Sauerstoffs mit dem Werkstoff des Werkstücks verhindert.

Im Arbeitsraum (15) wird das Werkstück mittels der beiden angetriebenen Schwenkachsen (33, 43) bewegt. Die Bewegung der beiden Schwenkachsen (33, 43) erfolgt abhängig von der Geometrie des Werkstücks derart, dass jede Fläche, jede Bohrung und jede Ausnehmung mindestens einmal nach unten zeigt. Bei dieser werkstückspezifischen Steuerung der Schwenkachsen (33, 43) fällt das lose Pulver, unterstützt durch den Volumenstrom des Gases, in den Trichter (25). An das Werkstück anhaftendes Pulver wird zusätzlich beispielsweise mittels des Vibrationsmoduls (16) gelöst.

Das freigesetzte Pulver wird mittels der Umwälzpumpe (101) durch den Absauganschluss (26) hindurch aus dem Arbeitsraum (15) abgesaugt. Der abgesaugte Volumenstrom wird beispielsweise in den Teilstrom durch die Staubmessvorrichtung (102) und den Teilstrom durch den Bypass (103) aufgeteilt. Diese beiden Teilströme haben beispielsweise den gleichen pneumatischen Widerstand, sodass das Verhältnis der Teilströme auch bei einer Änderung des Volumenstroms konstant bleibt. Hinter der Staubmessvorrichtung (102) werden die beiden Teilströme wieder vereinigt.

Das von der Staubmessvorrichtung (102) abgegebene Signal wird beispielsweise optisch dem Bediener als binäres Signal angezeigt. Liegt die Staubbelastung des Gasstroms oberhalb eines vorgegebenen Schwellenwerts, wird beispielsweise ein roter Balken angezeigt. Sobald die Staubbelastung den Schwellenwert unterschreitet, kann beispielsweise ein grüner Balken angezeigt werden. Der Schwellenwert ergibt sich beispielsweise aus dem arbeitsschutzrechtlichen Wert der maximalen Staubbelastung in Arbeitsräumen.

In der Abscheidevorrichtung (104) werden zunächst grobe Partikel im Grobabscheider (105) ausgeschieden. Diese Partikel werden in den Pulversammelbehälter (14) gefördert. Ein gefüllter Pulversammelbehälter (14) kann beispielsweise nach Sperren des Absperrventils (111) ausgetauscht werden. Der Gasstrom wird weiter durch die beiden Filterstufen (106, 107) gefördert. Hierbei werden weitere Partikel abgeschieden.

Das Gas wird weiter im Kreislauf umgewälzt, wobei das Werkstück zunehmend vom Pulver gereinigt wird und die Abscheidevorrichtung (104) weiterhin Partikel abscheidet. Mit fortdauernder Umwälzung sinkt die Staubbelastung des Gasstroms. Der mittels der Staubmessvorrichtung (102) geprüfte oder gemessene Wert der Staubbelastung unterschreitet den Schwellenwert.

Das Unterschreiten des Schwellenwerts ist das Signal für das erfolgreich durchgeführte Auspacken des Werkstücks. Das Auspackverfahren kann beendet werden. Die Antriebe der Schwenkachsen (33, 43) werden angehalten und die Umwälzpumpe (101) wird gestoppt. Beispielsweise kann eine Verriegelung der Haube (91) relativ zum Bodenteil (21) freigegeben werden. Der Arbeitsraum (15) kann nun geöffnet werden. Nach dem Lösen der Bauplattenfixierung kann das Werkstück mit der Bauplatte entnommen werden. Auch dieser Vorgang kann manuell oder mittels einer Handhabungsvorrichtung erfolgen. Bei einer manuellen Entnahme des Werkstücks besteht aufgrund der erfolgten Reinigung für den Bediener eine sehr geringe Gefahr, Staub einzuatmen oder mit Restpulver in Kontakt zu kommen.

Die Ansteuerung der genannten Funktionen kann in eine gemeinsame Steuerung eingebunden sein. So können bei Unterschreiten des Schwellenwertes automatisch die Schwenkantriebe und die Umlaufpumpe (101) gestoppt werden. Als Folgefunktion kann nach der Entriegelung der Haubenverriegelung die Haube (91) geöffnet werden. Die geöffnete Haube (91) kann das Freigabesignal für ein Handhabungsgerät ausgeben, das das bearbeitete Werkstück aus dem Arbeitsraum entnimmt.

Es ist auch denkbar, aufgrund der gemessenen Staubbelastung eine Restlaufzeit des Reinigungsprozesses anzuzeigen. Die Basis hierfür sind beispielsweise in einer Datenbank gespeicherte Erfahrungswerte des Reinigungsprozesses. Beispielsweise wird auf einem Bediendisplay die Anzeige der Restlaufzeit in Sekunden angezeigt.

Bei einer Prozessunterbrechung, beispielsweise bei einem Not-Aus, kann die Verriegelung des Arbeitsraums (15) z.B. manuell entriegelt werden. Auch die Haube (91) kann z.B. manuell oder mittels des Kettenzugs (13) angehoben werden. Die weitere Bearbeitung des Werkstücks kann dann an einer anderen Auspackstation (10) oder manuell erfolgen.

### Bezugszeichenliste:

- 1: Umgebung

- 10: Auspackstation
- 11: Traggerüst
- 12: Stellfüße
- 13: Hubvorrichtung, Kettenzug
- 14: Pulversammelbehälter
- 15: Arbeitsraum
- 16: Vibrationsmodul

- 20: Auspackeinheit
- 21: Bodenteil
- 22: Innenwandung
- 23: Rand
- 24: Zylindermantel
- 25: Trichter
- 26: Absauganschluss
- 27: Spülanschlüsse

- 31: Werkstückaufnahmeeinheit
- 32: Schwenkwelle
- 33: Schwenkachse, erste Schwenkachse
- 34: Wälzlager
- 35: Passfedernut
- 36: Tragkörper

- 41: Werkstückschwenkeinheit
- 42: Wälzlager
- 43: Schwenkachse, zweite Schwenkachse
- 44: Werkstückschwenkantrieb
- 45: Elektromotor
- 46: Getriebe
- 47: Riemenscheibe
- 48: Riementrieb
- 49: Riemenscheibe

- 51: Lagerungskörper
- 52: Bauplattenaufnahme
- 53: Durchbruch
- 54: Befestigungsschrauben
- 55: Zentrierbolzen

- 61: Werkstückspannsystem
- 62: Stößel
- 63: Federenergiespeicher, Druckfeder
- 64: Ringkolben
- 65: Zylinderwandung
- 66: Kugelkeilsystem
- 67: Kugeln
- 68: Pneumatikkanal in (62)
- 69: Radialdurchbrüche

- 71: Druckraum
- 72: Dichtring
- 73: Pneumatikrohr
- 74: Dichtelemente
- 75: Eingriffsausnehmung von (61)

- 91: Haube
- 92: Linearhubvorrichtungen
- 93: Grundkörper
- 94: Oberteil
- 95: Doppeldichtung
- 96: Gaszuführanschluss
- 97: Kugelumlaufschuhe
- 98: Stützrolle
- 101: Gaspumpe, Saugpumpe, Umwälzpumpe
- 102: Staubmessvorrichtung, Staubmessgerät
- 103: Bypass
- 104: Abscheidevorrichtung
- 105: Grobabscheider, Zyklonabscheider
- 106: Filterstufe, mittelfeines Filter
- 107: Filterstufe, Feinfilter
- 108: Pulverausgabekanal
- 109: Spülleitung

- 111: Absperrventil

## Patentansprüche

1. Auspackstation (10) mit einer um zwei Schwenkachsen (33, 43) schwenkbaren Bauplattenaufnahme (52) zum Entpacken von mittels eines additiven Fertigungsverfahrens hergestellten Bauteilen, mit einem verschließbaren, mittels eines Gasstroms durchströmbaren Arbeitsraum (15), **dadurch gekennzeichnet, dass**:
der Arbeitsraum (15) in einem geschlossenen, mittels einer Umwälzpumpe (101) beaufschlagten Kreislauf des Gasstroms eingebunden ist,
zwischen dem Arbeitsraum (15) und der Umwälzpumpe (101) zumindest in einem Teil-Gasstrom eine Staubmessvorrichtung (102) angeordnet ist und
der Umwälzpumpe (101) eine Abscheidevorrichtung (104) vorgeschaltet ist.

2. Auspackstation (10) nach Anspruch 1, **dadurch gekennzeichnet, dass** parallel zur Staubmessvorrichtung (102) ein Bypass (103) geschaltet ist.

3. Auspackstation (10) nach Anspruch 1, **dadurch gekennzeichnet, dass** die Abscheidevorrichtung (104) einen Grobabscheider (105), mindestens ein mittelfeines Filter (106) und mindestens ein Feinfilter (107) aufweist, die zueinander in Reihe geschaltet sind.

4. Auspackstation (10) nach Anspruch 1, **dadurch gekennzeichnet, dass** die Umwälzpumpe (101) eine Saugpumpe (101) ist, deren Saugseite der Abscheidevorrichtung (104) zugewandt ist.

5. Auspackstation (10) nach Anspruch 1, **dadurch gekennzeichnet, dass** eine Spülleitung (109) zwischen der Umwälzpumpe (101) und der Staubmessvorrichtung (102) angeordnet ist.

6. Auspackstation (10) nach Anspruch 3, **dadurch gekennzeichnet, dass** der Grobabscheider (105) mittels eines verschließbaren Pulverausgabekanals (108) mit einem Pulversammelbehälter (14) verbunden ist.

7. Auspackstation (10) nach Anspruch 1, **dadurch gekennzeichnet, dass** die Bauplattenaufnahme (52) ein kombiniertes mechanisch-pneumatisches Werkstückspannsystem (61) aufweist.

8. Auspackstation (10) nach Anspruch 1, **dadurch gekennzeichnet, dass** die Staubmessvorrichtung (102) mit einer Verriegelung des Arbeitsraums (15) gekoppelt ist, sodass die Verriegelung bei Unterschreiten eines vorgegebenen Schwellenwerts der Staubbelastung freigegeben wird.

9. Auspackstation (10) nach Anspruch 1, **dadurch gekennzeichnet, dass** die Bewegungen der Schwenkachsen (33, 43) der Bauplattenaufnahme (52) werkstückspezifisch gesteuert sind.

10. Verfahren zum Betreiben einer Auspackstation (10) nach Anspruch 1 mit einem auf einer Bauplatte aufgebauten Werkstück, wobei:
die Bauplatte mit dem Werkstück auf der Bauplattenaufnahme (52) fixiert wird,
der Arbeitsraum (15) verschlossen wird,
mittels der Umwälzpumpe (101) Gas in einem geschlossenen Kreislauf durch den Arbeitsraum (15), die Staubmessvorrichtung (102) und die Abscheidevorrichtung (104) gefördert wird,
die Staubbelastung des Gasstroms kontinuierlich mittels der Staubmessvorrichtung (102) ermittelt wird,
bei Unterschreiten eines voreingestellten Schwellenwertes der Staubbelastung ein Freigabesignal ausgegeben wird.

## Claims

1. Unpacking station (10) having a building board receptacle (52) which can be pivoted about two pivot axes (33, 43) for unpacking components produced by means of an additive manufacturing method, having a closable working space (15) through which a gas stream can flow, **characterized in that**:
the working space (15) is incorporated in a closed circuit of the gas stream which is acted on by means of a circulating pump (101),
a dust measuring device (102) is arranged between the working space (15) and the circulating pump (101) at least in a partial gas stream, and
a separating device (104) is connected upstream of the circulating pump (101).

2. Unpacking station (10) according to Claim 1, **characterized in that** a bypass (103) is connected parallel to the dust measuring device (102).

3. Unpacking station (10) according to Claim 1, **characterized in that** the separating device (104) has a coarse separator (105), at least one medium-fine filter (106) and at least one fine filter (107) which are connected in series with one another.

4. Unpacking station (10) according to Claim 1, **characterized in that** the circulating pump (101) is a suction pump (101), the suction side of which faces the separating device (104).

5. Unpacking station (10) according to Claim 1, **characterized in that** a flushing line (109) is arranged between the circulating pump (101) and the dust measuring device (102).

6. Unpacking station (10) according to Claim 3, **characterized in that** the coarse separator (105) is connected to a powder collection container (14) by means of a closable powder discharge channel (108).

7. Unpacking station (10) according to Claim 1, **characterized in that** the building board receptacle (52) has a combined mechanical-pneumatic workpiece clamping system (61).

8. Unpacking station (10) according to Claim 1, **characterized in that** the dust measuring device (102) is coupled to a lock of the working space (15), with the result that the lock is released when the dust load falls below a predefined threshold value.

9. Unpacking station (10) according to Claim 1, **characterized in that** the movements of the pivot axes (33, 43) of the building board receptacle (52) are controlled in a workpiece-specific manner.

10. Method for operating an unpacking station (10) according to Claim 1 with a workpiece built up on a building board, wherein
the building board with the workpiece is fixed on the building board receptacle (52),
the working space (15) is closed,
gas is conveyed in a closed circuit through the working space (15), the dust measuring device (102) and the separating device (104) by means of the circulating pump (101),
the dust load of the gas stream is determined continuously by means of the dust measuring device (102),
a release signal is output when the dust load falls below a preset threshold value.

## Revendications

1. Poste de déballage (10) avec un logement de plaque de construction (52) pouvant pivoter autour de deux axes de pivotement (33, 43) pour le déballage de composants fabriqués au moyen d'un procédé de fabrication additive, avec un espace de travail (15) pouvant être fermé, pouvant être traversé par un flux de gaz, **caractérisé en ce que** :
l'espace de travail (15) est intégré dans un circuit fermé du flux de gaz sollicité au moyen d'une pompe de circulation (101),
un dispositif de mesure de poussière (102) est disposé entre l'espace de travail (15) et la pompe de circulation (101) au moins dans un flux de gaz partiel et
un dispositif de séparation (104) est monté en amont de la pompe de circulation (101).

2. Poste de déballage (10) selon la revendication 1, **caractérisé en ce qu'**une dérivation (103) est montée parallèlement au dispositif de mesure de poussière (102).

3. Poste de déballage (10) selon la revendication 1, **caractérisé en ce que** le dispositif de séparation (104) présente un séparateur grossier (105), au moins un filtre moyennement fin (106) et au moins un filtre fin (107), qui sont montés en série les uns par rapport aux autres.

4. Poste de déballage (10) selon la revendication 1, **caractérisé en ce que** la pompe de circulation (101) est une pompe d'aspiration (101), dont le côté d'aspiration est tourné vers le dispositif de séparation (104).

5. Poste de déballage (10) selon la revendication 1, **caractérisé en ce qu'**une conduite de rinçage (109) est disposée entre la pompe de circulation (101) et le dispositif de mesure de poussière (102).

6. Poste de déballage (10) selon la revendication 3, **caractérisé en ce que** le séparateur grossier (105) est relié à un récipient collecteur de poudre (14) au moyen d'un canal de distribution de poudre (108) pouvant être fermé.

7. Poste de déballage (10) selon la revendication 1, **caractérisé en ce que** le logement de plaque de construction (52) présente un système de serrage de pièce mécanique-pneumatique combiné (61).

8. Poste de déballage (10) selon la revendication 1, **caractérisé en ce que** le dispositif de mesure de poussière (102) est couplé à un verrouillage de l'espace de travail (15), de sorte que le verrouillage est libéré en cas de sous-dépassement d'une valeur seuil prédéfinie de la charge de poussière.

9. Poste de déballage (10) selon la revendication 1, **caractérisé en ce que** les mouvements des axes de pivotement (33, 43) du logement de plaque de construction (52) sont commandés de manière spécifique à la pièce.

10. Procédé pour faire fonctionner un poste de déballage (10) selon la revendication 1 avec une pièce montée sur une plaque de construction, dans lequel
la plaque de construction est fixée avec la pièce sur le logement de plaque de construction (52),
l'espace de travail (15) est fermé,
du gaz est transporté au moyen de la pompe de circulation (101) dans un circuit fermé à travers l'espace de travail (15), le dispositif de mesure de poussière (102) et le dispositif de séparation (104),
la charge de poussière du flux de gaz est déterminée en continu au moyen du dispositif de mesure de poussière (102),
un signal de libération est émis en cas de sous-dépassement d'une valeur seuil prédéfinie de la charge de poussière.
